# EUROPÄISCHE PATENTSCHRIFT

(11) **EP 1 636 071 B1**
(45) Veröffentlichungstag und Bekanntmachung des Hinweises auf die Patenterteilung: **21.02.2007**
(21) Anmeldenummer: 04766064.2
(22) Anmeldetag: 22.06.2004
(51) Int. Cl.: B60R 21/015

(54) **SITZBELEGUNGSSENSOR**
SEAT OCCUPANCY SENSOR
CAPTEUR PERMETTANT DE DETECTER L'OCCUPATION D'UN SIEGE

(30) Priorität: 23.06.2003 EP 03101834; 26.03.2004 DE 102004015408
(43) Veröffentlichungstag der Anmeldung: 22.03.2006
(73) Patentinhaber: IEE INTERNATIONAL ELECTRONICS & ENGINEERING S.A., 6468 Echternach (LU); Bayerische Motoren Werke Aktiengesellschaft, 80809 München (DE)
(72) Erfinder: LORENZ, Holger, 54470 Bernkastel (DE); HENZE, Karsten, 80538 München (DE)
(74) Vertreter: Beissel, Jean
(86) Internationale Anmeldenummer: PCT/EP2004/051189
(87) Internationale Veröffentlichungsnummer: WO 2005/000637

(56) Entgegenhaltungen:
- US-A1- 2003 023 414

## Beschreibung

Die vorliegende Erfindung betrifft einen Sitzbelegungssensor, insbesondere zur Verwendung bei der Sitzbelegungserkennung in einem Fahrzeug.

Sitzbelegungssensoren werden seit geraumer Zeit zur Airbagsteuerung in Fahrzeugen eingesetzt. Anhand dieser Sitzbelegungssensoren wird ein Belegungszustand eines Fahrzeugsitzes ermittelt und der oder die dem Sitz zugeordneten Airbags werden nur dann aktiviert, wenn der momentane Belegungszustand eine solche Auslösung erforderlich macht. Diese Sitzbelegungssensoren weisen im allgemeinen eine Vielzahl von Schaltelementen, z:B. Drucksensoren, auf, die verteilt in der Sitzfläche des Fahrzeugssitzes angeordnet sind. Eine an den Sitzbelegungssensor angeschlossene Auswerteeinheit fragt den Schaltzustand der einzelnen Schaltelemente ab und ermittelt aus den jeweiligen Schaltzuständen einen Belegungszustand des Sitzes. Ist der Sitz durch eine Person belegt, werden mehrere der Schaltelemente aufgrund der durch eine Person auf den Sitz ausgeübten Gewichtskraft ausgelöst, ein Zustand der von der angeschlossenen Auswerteschaltung als Belegungszustand des Sitzes erkannt und an die Airbagsteuerung weitergegeben wird.

Um die Schaltzustände der einzelnen Schaltelemente abfragen zu können, muss im Prinzip jedes der Schaltelemente an die Auswerteschaltung angeschlossen werden. Um hierbei die Zahl der Anschlussleitungen zu reduzieren, werden die einzelnen Schaltelemente im allgemeinen in einer Matrix-Verschaltung betrieben. Dies bedeutet, dass bei einer Anzahl von *n*m* Schaltelementen, im wesentlichen n Zeilenleiter und m Spaltenleiter vorgesehen sind, wobei zwischen jeweils einem Zeilenleiter und einem Spaltenleiter eines der Schaltelemente verschaltet ist. Hierbei ist zu bemerken, dass eine solche Matrix-Verschaltung eine schaltungstechnische Anordnung darstellt. Das heißt, dass eine Matrix-Verschaltung in einer realen Anordnung weder voraussetzt, dass die Sensorelemente in einer regelmäßigen Gitterverteilung angeordnet sein müssen, noch dass die einzelnen Verbindungsleiter geradlinig und parallel bzw. senkrecht zueinander verlaufen müssen.

Zum Auswerten einer Sensoranordnung in Matrix-Verschaltung wird folgendermaßen vorgegangen. Zunächst legt man die gesamte Matrix-Verschaltung mit Ausnahme eines ersten Spaltenleiters auf das gleiche Potential, z.B. auf Masse. An den ersten Spaltenleiter wird nun eine Testspannung angelegt und anschließend selektiv der an den einzelnen Zeilenleitern abfließende Strom gemessen. Auf diese Weise kann man selektiv die Schaltzustände der zwischen dem ersten Spaltenleiter und den verschiedenen Zeilenleitern verschalteten Schaltelemente ermitteln. Wird diese Vorgehensweise für jeden der Spaltenleiter wiederholt, kann man sämtliche Schaltelemente nacheinander selektiv ausmessen.

Mit dem beschriebenen Sitzbelegungssensor kann die Belegungssituation ei nes Sitzes für verschiedene Bereiche des Fahrzeugsitzes sehr genau ermittelt und anhand der Druckverteilung eine verhältnismäßig genaue Klassifizierung der Sitzbelegung bestimmt werden. Eine solche genaue Klassifizierung ist für sicherheitsrelevante Anwendungen, wie sie die Steuerung des dem Fahrzeugsitz zugeordneten Airbags darstellt, notwendig um eine unerwünschte Aktivierung des Sicherheitssystems zu vermeiden. Allerdings ist die oben beschriebene Sitzbelegungserkennung verhältnismäßig aufwendig sowohl was die Verschaltung der einzelnen Schaltelemente als auch die Ausgestaltung der Auswerteschaltung angeht.

Für nicht-sicherheitskritische Anwendungen, bei denen eine genaue Klassifizierung der Sitzbelegung nicht notwendig ist, ist es wünschenswert, einen wen iger aufwendigen Sitzbelegungssensor vorzusehen. Eine derartige Anwendung stellt beispielsweise ein Sicherheitsgurt-Warnsystem dar, das einen in dem Fahrzeugsitz einsitzenden Passagier zum Anlegen des Sicherheitsgurtes mahnt. Ein derartiges Warnsystem gibt beispielsweise ein akustisches oder optisches Signal aus, wenn der Fahrzeugsitz belegt ist ohne dass das Gurtschloss des zugeordneten Sicherheitsgurtes eingeschnappt ist. Der Sitzbelegungssensor in einem derartigen System muss im wesentlichen eine Unterscheidung einer

Sitzbelegung durch einen Passagier und eine Belegung durch einen Gegenstand, wie beispielsweise eine Handtasche, ermöglichen. Eine aufwendigere Klassifizierung der Sitzbelegung ist bei dieser Anwendung nicht notwendig. Die DE-A-10143326 zeigt die Merkmale des Oberbegriffs des Anspruchs 1.

### Aufgabe der Erfindung

Aufgabe der vorliegenden Erfindung ist es folglich, einen besonders einfachen Sitzbelegungssensor vorzuschlagen, der sich für den Einsatz in nicht sicherheitskritischen Anwendungen eignet.

### Allgemeine Beschreibung der Erfindung

Diese Aufgabe wird erfindungsgemäß gelöst durch einen Sitzbetegungssensor nach Anspruch 1. Dieser Sitzbelegungssensor umfasst mindestens zwei druckaktivierbare Schaltelemente, die in einem gewissen Abstand zueinander einer Fläche eines Sitzes derart zugeordnet werden können, dass ein erstes Schaltelement einem ersten Bereich des Sitzes zugeordnet ist und ein zweites Schaltelement einem zweiten Bereich des Sitzes zugeordnet ist. Erfindungsgemäß sind das erste und das zweite Schaltelement derart miteinander verschaltet, dass eine logische UND-Verknüpfung realisiert ist. In einer besonders einfachen Ausgestaltung der Erfindung sind das erste und das zweite Schaltelement beispielsweise in Serie geschaltet.

Die erfindungsgemäße Verschaltung der mindestens zwei Schaltelemente in einer UND-Verknüpfung bewirkt, dass ein Signal von den beiden Schaltelementen nur dann messbar ist, wenn beide Schaltelemente durch eine entsprechende Belegung des Sitzes ausgelöst sind. Bei dem vorgeschlagenen Sitzbelegungssensor sind dem nach mindestens zwei Schaltelemente, die beim Einbau des Sensors verschiedenen Bereichen des Fahrzeugsitzes zugeordnet sind, derart verschaltet, dass ein Belegungszustand des Sitzes nur dann als solcher erkannt wird, wenn beide Schaltelemente gleichzeitig durch eine Belegung ausgelöst sind. Hierdurch wird eine für das Gurtwarnsystem relevante Sitzbelegung erst dann als solche erkannt, wenn die Belegung des Fahrzeugsitzes sich über eine vorbestimmte Distanz erstreckt. Eine lokale Auslösung des Sitzbelegungssensors, wie sie beispielsweise durch die Präsenz eines Gegenstands wie beispielsweise durch eine auf dem Sitz abgelegte Handtasche erfolgt, wird nicht als Sitzbelegung erkannt und das Gurtwamsystem spricht dementsprechend nicht an.

Die erfindungsgemäße Verschaltung von mindestens zwei beabstandeten Schaltelementen ermöglicht demnach eine besonders einfache Sitzbelegungserkennung, die ohne aufwendige Matrix-Verschaltung und ohne aufwendige Auswerteschaltung in der Lage ist, zwischen einer lokalen und einer flächigen Belegung des Sitzes zu unterscheiden.

Es ist anzumerken, dass der Sitzbelegungssensor mehr als zwei Schaltelemente aufweisen kann. So können beispielsweise drei oder mehr Schaltelemente in einer logischen UND-Verknüpfung verschaltet sein. Alternativ können mehrere Gruppen von jeweils zwei oder mehr Schaltelementen in UND-Verknüpfung vorgesehen sein.

Die Schaltelemente können in einer besonders einfachen Ausgestaltung als einfache Schalter, z.B. als Membranschalter ausgestaltet sein. In einer vorteilhaften Ausgestaltung der Erfindung umfasst das erste und/oder zweite Schaltelement jedoch einen Drucksensor. In dieser Ausgestaltung kann zusätzlich zur Erkennung einer Belegung auch eine Information über die Höhe der ausgeübten Druckkraft gewonnen werden, anhand derer eine genauere Klassifikation der ermittelten Sitzbelegung erfolgen kann.

In einer bevorzugten Ausgestaltung der Erfindung umfassen das erste und/oder zweite Schaltelement eine Mehrzahl von einzelnen Schaltzellen, die untereinander derart verschaltet sind, dass eine logische ODER-Verknüpfung realisiert ist. Die einzelnen Schaltzellen eines Schaltelements können beispielsweise parallel verschaltet sein. Die Verschaltung der einzelnen Schaltzellen in einer ODER-Verknüpfung bewirkt, dass das Schaltelement bereits ausgelöst ist, sobald eine einzelne Schaltzelle durch eine Druckkraft ausgelöst ist. Sind die einzelnen Schaltzellen in einem Cluster über eine bestimmte Zone des Fahrzeugsitzes verteilt angeordnet, so stellt diese Zone den aktiven Bereich der jeweiligen Schaltelemente dar. Eine Belegung an einem beliebige n Ort innerhalb dieser Zone wird demnach als eine Belegung des Schaltelementes erkannt. Eine derartige Ausgestaltung der Schaltelemente mit mehreren individuellen Schaltzellen erlaubt es, den Bereich, in dem eine Sitzbelegung erkannt werden kann, räumlich definiert auszudehnen.

In einer möglichen Ausgestaltung eines Sitzbelegungssensors sind die einzelnen Sensorzellen eines Schaltelementes beispielsweise in einer Reihe hintereinander angeordnet. Jedes der Schaltelemente weist demzufolge einen streifenförmigen aktiven Bereich auf. Die Schaltelemente können dann derart an oder in dem Fahrzeugsitz angeordnet werden, dass sich die streifenförmigen aktiven Bereiche in einem bestimmten seitlichen Abstand zueinander von einer Vorderkante des Sitzes zu einer Hinterkante erstrecken. Eine Sitzbelegung durch einen Passagier, d.h. eine Sitzbelegung mit einer ausreichenden seitlichen Ausdehnung, kann demnach unabhängig von der Einsitzposition des Passagiers in Längsrichtung des Sitzes wirksam erkannt werden. Es kann damit eine Sitzbelegung anhand des von den Sitzbeinhöckem des Passagiers ausgeübten Druckes unabhängig von der tatsächlichen Größe des Passagiers und dem individuellen Abstand der beiden Höcker erkannt werden.

In einer besonders vorteilhaften Ausgestaltung der Erfindung sind die beiden Schaltelemente in zumindest annähernd gleichen Abstand bezüglich einer in Fahrzeuglängsrichtung verlaufenden Mittellinie des Sitzes und in einem gewissen Abstand zueinander angeordnet. Durch diese symmetrische Anordnung der Schaltelemente bezüglich der Mittellinie des Sitzes wird eine für das Gurtwarnsystem relevante Sitzbelegung erst dann als solche erkannt, wenn die Belegung des Fahrzeugsitzes sich über eine vorbestimmte Distanz erstreckt und wenn die Belegung zumindest annähernd symmetrisch bezüglich der Mittelebene des Sitzes erfolgt. Eine lokale Auslösung des Sitzbelegungssensors, wie sie beispielsweise durch die Präsenz eines Gegenstands wie beispielsweise durch eine auf dem Sitz abgelegte Handtasche erfolgt, wird nicht als Sitzbelegung erkannt und das Gurtwarnsystem spricht dementsprechend nicht an.

Alternativ können die Schaltelemente derart in dem Sitz angeordnet sein, dass ein erster aktiver Bereich sich in einem vorderen Bereich des Sitzes quer zu diesem erstreckt, während ein zweiter aktiver Bereich in einer rückwärtigen Position des Sitzes quer zu diesem erstreckt.

Es ist anzumerken, dass die einzelnen Schaltzellen vorzugsweise jeweils einen Drucksensor umfassen, so dass eine Information über die Höhe der ausgeübten Druckkraft gewonnen werden kann, anhand derer eine genauere Klassifikation der ermittelten Sitzbelegung erfolgen kann.

Als Drucksensoren für die oben beschriebenen Ausgestaltungen der Erfindung eignen sich insbesondere Foliendrucksensoren, wobei je nach Anforderung Foliendrucksensoren unterschiedlicher Typen eingesetzt werden können. So können beispielsweise Foliendrucksensoren zum Einsatz kommen, die in dem sogenannten Durchgangsmodus (Through-Mode) arbeiten oder Foliendrucksensoren, die in dem sogenannten Kurzschlussmodus (Shunt-Mode) arbeiten.

Bei Foliendrucksensoren, die im Durchgangsmodus arbeiten, ist ein erstes Kontaktelement auf einer ersten Trägerfolie und ein zweites Kontaktelement auf einer zweiten Trägerfolie angeordnet, wobei die beiden Trägerfolien in einem gewissen Abstand derart zueinander angeordnet sind, dass sich die beiden Kontaktelemente gegenüberstehen. Zwischen den beiden Kontaktelementen ist eine Schicht aus einem Halbleitermaterial angeordnet, die beim Auslösen des Sensors gegen die beiden Kontaktelemente gepresst wird wobei der Widerstand zwischen den beiden Kontaktelementen je nach Anpressdruck variiert.

Foliendrucksensoren in Kurzschlussmodus weisen zwei Kontaktelemente auf, die auf einer ersten Trägerfolie in einem bestimmten Absatz zueinander angeordnet sind. Auf einer zweiten beabstandeten Trägerfolie ist eine Halbleiterschicht derart angebracht, dass sie den Bereich zwischen den beiden Kontaktelementen überdeckt und die beiden Kontaktelemente beim Zusammenpressen der Trägerfolien kontaktiert.

### Beschreibung mehrerer Ausgestaltungen anhand der Figuren

Im folgenden wird eine Ausgestaltung der Erfindung anhand der beiliegenden Figuren beschrieben. Es zeigen:
- Fig.1:: einen Schnitt durch eine Ausgestaltung eines Sitzbelegungssensors;
- Fig.2:: einen Schnitt durch eine Sensorzelle im Kurzschluss-Modus;
- Fig.3:: ein Blockschaltbild einer Ausgestaltung eines Sitzbelegungssensors;
- Fig.4:: ein Blockschaltbild einer weiteren Ausgestaltung eines Sitzbelegungssensors.

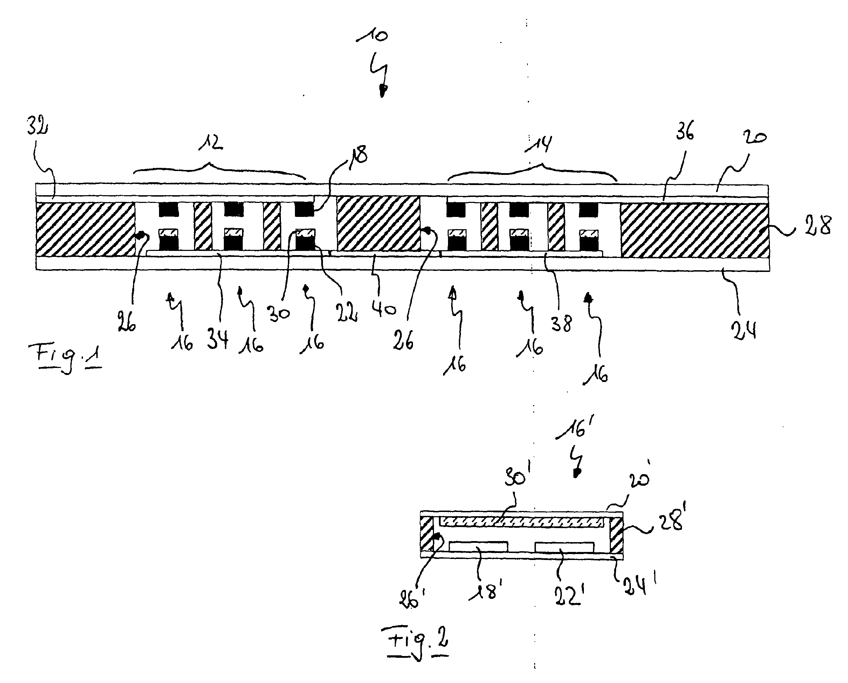

Eine erste Ausgestaltung eines Sitzbelegungssensors 10 ist in einem Querschnitt in der Fig. 1 dargestellt. Es handelt sich um eine Ausgestaltung mit Foliendrucksensoren im sogenannten Durchgangsmodus "through mode".

Der dargestellte Sitzbelegungssensor 10 umfasst ein erstes Schaltelement 12 und ein zweites Schaltelement 14, die jeweils mehrere individuelle Sensorzellen 16 aufweisen.

Jede Sensorzelle 16 umfasst eine erste Elektrode 18, die auf einer ersten Trägerfolie 20 angeordnet ist und eine zweite Elektrode 22, die auf einer zweiten Trägerfolie 24 angeordnet ist. Die beiden Trägerfolien 20 und 24 sind mittels eines mit Aussparungen 26 versehenen Abstandhalters 28 derart zueinander angeordnet, dass sich die erste Elektrode 18 und die zweite Elektrode 22 jeder Sensorzelle 16 innerhalb einer der Aussparungen 26 in einem gewissen Abstand zueinander gegenüber stehen.

Eine Schicht 30 aus einem drucksensitiven Material, z.B. einem geeigneten Halbleitermaterial, ist auf jeweils eine der Elektroden, z.B. Elektrode 22, jeder Sensorzelle 16 aufgebracht, so dass beim Zusammendrücken der beiden Trägerfolien 20 und 24 ein druckabhängiger elektrischer Kontakt zwischen den beiden Elektroden durch die drucksensitive Schicht 30 hindurch hergestellt wird.

Es ist anzumerken, dass alle Sensorzellen 16 gemeinsame Trägerfolien 20 und 24 aufweisen, auf denen die einzelnen Elektroden 18 und 22 angeordnet sind, so dass der Sitzbelegung eine zusammenhängende Matte bildet.

Die Sensorzellen 16 eines Schaltelementes 12 bzw. 14 sind derart miteinander verschaltet, dass eine logische ODER-Verknüpfung realisiert wird. Dies bedeutet, dass das jeweilige Schaltelement ein einer Auslösung entsprechendes Ausgangssignal produziert, sobald mindestens eine der Sensorzellen ausgelöst wird. In der dargestellten Ausgestaltung wird die logische ODER-Verknüpfung dadurch erreicht, dass die einzelnen Sensorzellen 16 des jeweiligen Schaltelements 12 bzw. 14 parallel zueinander verschaltet sind. Hierzu sind beispielsweise die ersten Elektroden 18 der Sensorzellen 16 des Schaltelementes 12 durch eine Leiterbahn 32 miteinander verbunden, während die jeweils zweiten Elektroden 22 der Sensorzellen 16 des Schaltelementes 12 durch eine Leiterbahn 34 miteinander verbunden sind. Analog sind die ersten Elektroden 18 der Sensorzellen 16 des Schaltelementes 14 durch eine Leiterbahn 36 miteinander verbunden, während die jeweils zweiten Elektroden 22 der Sensorzellen 16 des Schaltelementes 14 durch eine Leiterbahn 38 miteinander verbunden sind.

Die beiden Schaltelemente 12 und 14 selbst sind derart miteinander verschaltet, dass eine logische UND-Verknüpfung realisiert wird. Eine solche Verschaltung bewirkt, dass ein Ausgangssignal des Sitzbelegungssensors nur dann an den Ausgängen des Sitzbelegungssensors anliegt, wenn beide Schaltelemente 12 und 14 durch eine Druckkraft ausgelöst werden. In der dargestellten Ausgestaltung wird die logische UND-Verknüpfung dadurch realisiert, dass die beiden Schaltelemente 12 und 14 in Serie geschaltet sind. Hierzu ist beispielsweise die Leiterbahn 34 mittels eines Verbindungslefters 40 mit der Leiterbahn 38 verbunden, während das Ausgangssignal des Sitzbelegungssensors zwischen den Leiterbahnen 32 und 36 ermittelt wird.

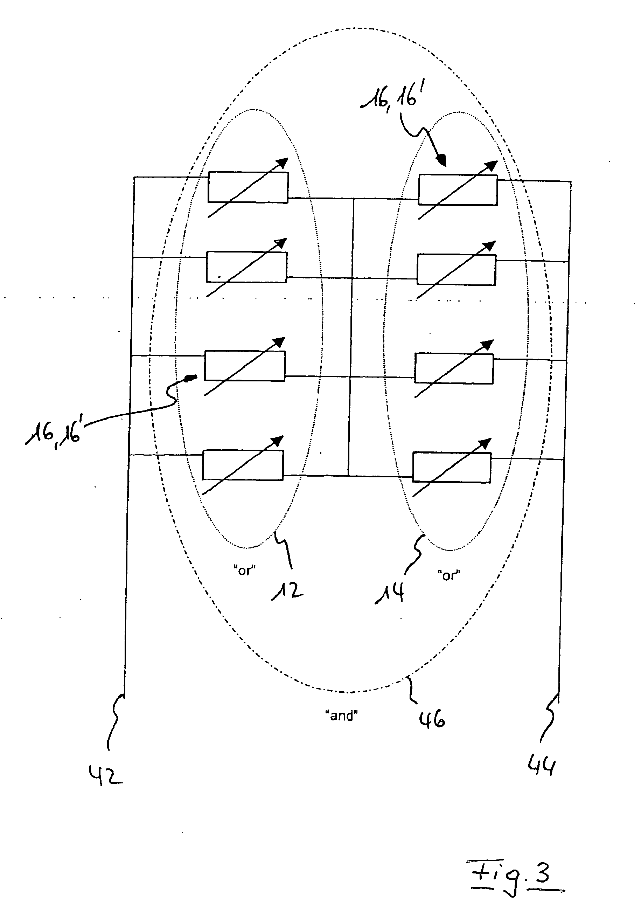

In einer alternativen Ausgestaltung des Sitzbelegungssensors 10, können die einzelnen Schaltelemente 12 bzw. 14 aus Foliendrucksensoren im sogenannten Kurzschlussmodus "shunt mode" aufgebaut sein. In der Fig. 2 ist ein Durchschnitt durch eine Sensorzelle 16' dieses Typs dargestellt. Bei dieser Ausgestaltung sind die erste Elektrode 18' und die zweite Elektrode 22' in einem gewissen Abstand zueinander auf einer der Trägerfolien 24' aufgebracht, während die drucksensitive Schicht 30' auf der anderen Trägerfolie 20' aufgebracht ist. Die beiden Trägerfolien sind mittels eines mit einer Aussparung 26' versehe nen Abstandhalters 28' derart in einem gewissen Abstand zueinander angeordnet, dass sich die Schicht 30' und die beiden Elektroden 18' und 22' in einem gewissen Abstand zueinander gegenüber stehen, so dass beim Zusammendrücken der beiden Trägerfolien 20' und 24' die drucksensitive Schicht 30' die beiden Elektroden 18' und 22' miteinander kontaktiert (kurzschließt) und ein druckabhängiger elektrischer Kontakt zwischen den beiden Elektroden durch die drucksensitive Schicht 30 hindurch hergestellt wird.

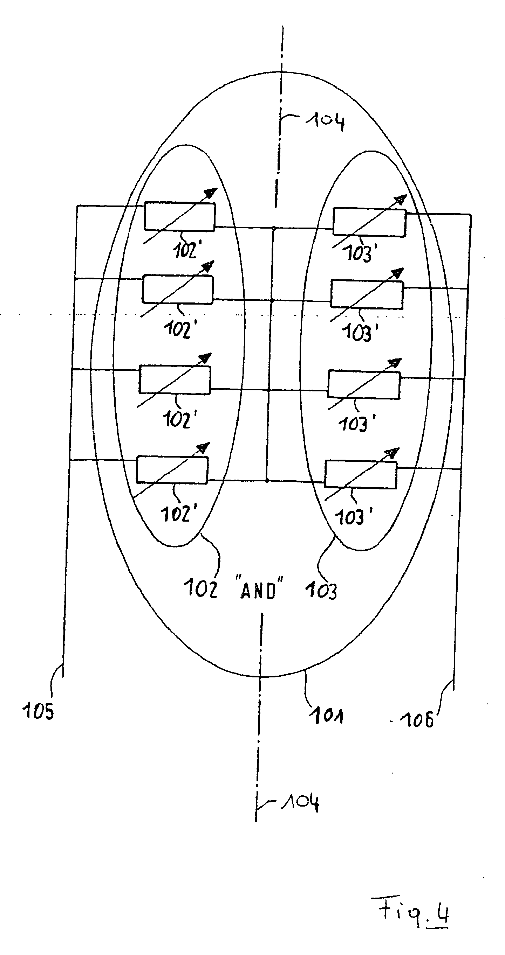

Die Fig. 3 zeigt ein Blockschaltbild einer Ausgestaltung eines Sitzbelegungssensors. Die einzelnen Sensorzellen 16 bzw. 16' sind in dieser Figur als variable Widerstände eingezeichnet, da der elektrische Widerstand der Foliendrucksensoren mit zunehmendem Druck auf die Zelle abnimmt.

Jedes der Schaltelemente 12 und 14 ist in der dargestellten Ausgestaltung aus 4 einzelnen Sensorzellen 16 bzw. 16' aufgebaut, die jeweils in einer Reihe hintereinander angeordnet sind. Die einzelnen Zellen eines Schaltelementes 12 bzw. 14 sind dabei in einer Parallelschaltung verschaltet, so dass für die Sensorzellen jedes Schaltelementes eine logische ODER-Verknüpfung realisiert ist. Die beiden Schaltelemente 12 und 14 ihrerseits sind zwischen zwei Anschlussleitem 42 und 44 in Serie geschaltet, so dass sich eine logische UND-Verknüpfung ergibt (dargestellt durch die strich-punktierte Linie 46).

In der Figur 4 ist in Blockschaltbild einer weiteren Ausgestaltung eines erfindungsgemäßen Sitzbelegungssensors gezeigt.

In einer in der Draufsicht gezeigten Sitzfläche 101 eines Sitzes (nicht gezeigt) sind zwei Schaltelemente 102 und 103 angeordnet, die mehrere Sensorzellen 102' und 103' enthalten. Die Zellen 102' und 103' sind als variable Widerstände eingezeichnet. Es handelt sich dabei um Foliendrucksensoren, deren elektrischer Widerstand mit zunehmendem Druck auf die Zelle abnimmt.

Das Schaltelement 102 ist in Fahrtrichtung gesehen links und das Schaltelement 103 rechts von der ebenfalls in Fahrtrichtung verlaufenden Mittellinie 104 des Sitzes angeordnet. Die Sensorzellen 102' und 103' sind, wie bei der oben beschriebenen Ausgestaltung, jeweils in einer Parallelschaltung verschaltet, so dass für die Sensorzellen jedes Schaltelementes eine logische ODER-Verknüpfung realisiert Ist. Die beiden Schaltelemente 102 und 103 ihrerseits sind zwischen zwei Anschlussleitern 105 und 106 in Serie geschaltet, so dass sich eine logische UND-Verknüpfung ergibt.

Bei Einsitzen einer Person wird mindestens jeweils eine der Sensorzellen gedrückt und ihr Widerstand auf einen Wert gleich der nahe Null reduziert.

Diese Widerstandsänderung hat eine Reduktion des Gesamtwiderstands der aus den beiden Schaltelementen 102 und 103 bestehenden UND-Verknüpfung ebenfalls auf den Wert gleich oder nahe Null zur Folge.

Dieser Widerstandswert ist für eine sitzende Person typisch. Im Gegensatz dazu ist der Widerstandswert dann, wenn ein Gegenstand aufliegt, in der Regel deutlich größer als Null, da die Gewichtsbelastung entweder nicht symmetrisch und/oder nicht so groß ist wie bei einer Person.

Dadurch ist es möglich, mit hinreichender Genauigkeit für nicht-sicherheitskritische Anwendungen eine auf dem Sitz sitzende Person mit hinreichender Genauigkeit zu erkennen.

### Referenzzeichenliste

- 10: Sitzbelegungssensor
- 12: erstes Schaltelement
- 14: zweites Schaltelement
- 16, 16': Sensorzelle
- 18, 18': erste Elektrode
- 20, 20': erste Trägerfolie
- 22, 22': zweite Elektrode
- 24, 24': zweite Trägerfolie
- 26, 26': Aussparungen
- 28, 28': Abstandhalters
- 30, 30': drucksensitive Schicht
- 32, 34, 36, 38: Leiterbahnen
- 40: Verbindungsleiter
- 42, 44: Anschlussleiter
- 46: Darstellung der UND-Verknüpfung

## Patentansprüche

1. Sitzbelegungssensor mit mindestens zwei druckaktivierbaren Schaltelementen, die in einem gewissen Abstand zueinander einer Fläche eines Sitzes derart zugeordnet werden können, dass ein erstes Schaltelement einem ersten Bereich des Sitzes zugeordnet ist und ein zweites Schaltelement einem zweiten Bereich des Sitzes zugeordnet ist, **dadurch gekennzeichnet, dass** das erste und das zweite Schaltelement derart miteinander verschaltet sind, dass eine logische UND-Verknüpfung realisiert ist.

2. Sitzbelegungssensor nach Anspruch 1, wobei das erste und das zweite Schaltelement in Serie geschaltet sind.

3. Sitzbelegungssensor nach einem der Ansprüche 1 oder 2, wobei das erste und/oder zweite Schaltelement einen Drucksensor umfasst.

4. Sitzbelegungssensor nach einem der Ansprüche 1 bis 3, wobei das erste und/oder zweite Schaltelement eine Mehrzahl von einzelnen Schaltzellen umfassen, die untereinander derart verschaltet sind, dass eine logische ODER-Verknüpfung realisiert ist.

5. Sitzbelegungssensor nach Anspruch 4, wobei die einzelnen Schaltzellen eines Schaltelements parallel verschaltet sind.

6. Sitzbelegungssensor nach einem der Ansprüche 4 oder 5, wobei eine Schaltzelle einen Drucksensor umfasst.

7. Sitzbelegungssensor nach einem der Ansprüche 3 oder 6, wobei der Drucksensor einen Foliendrucksensor im Durchgangsmodus (Through-Mode) aufweist.

8. Sitzbelegungssensor nach einem der Ansprüche 3 oder 6, wobei der Drucksensor einen Foliendrucksensor im Kurzschlussmodus (Shunt-Mode) aufweist.

9. Sitzbelegungssensor nach einem der Ansprüche 1 bis 8, wobei das erste und das zweite Schaltelement in zumindest annähernd gleichen Abstand bezüglich einer in Fahrzeuglängsrichtung verlaufenden Mittellinie des Sitzes und in einem gewissen Abstand zueinander angeordnet sind.

10. Sitzbelegungssensor nach einem der Ansprüche 1 bis 9, wobei das erste und das zweite Schaltelement im wesentlichen symmetrisch bezüglich einer in Fahrtrichtung verlaufenden Mittellinie (4) des Sitzes in einem vorgegebenen Abstand zueinander angeordnet sind.

## Claims

1. Seat occupancy sensor with at least two switch elements actuatable by pressure which can be allocated to a surface of a seat with a certain distance between them in such a way that a first switch element is allocated to a first area of the seat and a second switch element is allocated to a second area of the seat, **characterized in that** the first and second switch elements are connected together in such a way as to implement a logical AND gate

2. Seat occupancy sensor according to Claim 1, wherein the first and second switch elements are connected in series

3. Seat occupancy sensor according to either of Claims 1 or 2, wherein the first and/or second switch element comprises a pressure sensor.

4. Seat occupancy sensor according to any one of Claims 1 to 3, wherein the first and/or second switch element comprises a plurality of individual switching cells connected together in such a way as to implement a logical OR gate

5. Seat occupancy sensor according to Claim 4, wherein the individual switching cells of a switch element are connected in parallel.

6. Seat occupancy sensor according to either of Claims 4 or 5, wherein a switching cell comprises a pressure sensor

7. Seat occupancy sensor according to either of Claims 3 or 6, wherein the pressure sensor presents a foil-type pressure sensor in through-mode

8. Seat occupancy sensor according to either of Claims 3 or 6, wherein the pressure sensor presents a foil-type pressure sensor in shunt mode

9. Seat occupancy sensor according to any one of Claims 1 to 8, wherein the first and second switch elements are arranged at least approximately at equal distances from a seat centreline running longitudinally with respect to the vehicle and at a certain distance from each other

10. Seat occupancy sensor according to any one of Claims 1 to 9, wherein the first and second switch elements are arranged essentially symmetrically with respect to a seat centreline running longitudinally with respect to the vehicle and at a predetermined distance from each other

## Revendications

1. Capteur d'occupation de siège comprenant au moins deux éléments de commutation activables par pression, qui peuvent être attribués à une certaine distance l'un de l'autre à une surface d'un siège de telle sorte qu'un premier élément de commutation est attribué à une première zone du siège et un second élément de commutation est attribué à une seconde zone du siège, **caractérisé en ce que** le premier et le second éléments de commutation sont connectés entre eux de telle sorte qu'une opération ET logique est réalisée

2. Capteur d'occupation de siège selon la revendication 1, le premier et le second élément de commutation étant branchés en série

3. Capteur d'occupation de siège selon l'une quelconque des revendications 1 ou 2, le premier et/ou le second élément de commutation comprenant un capteur de pression

4. Capteur d'occupation de siège selon l'une quelconque des revendications 1 à 3, le premier et/ou le second élément de commutation comprenant une pluralité de cellules de commutation individuelles, qui sont connectées entre elles de telle sorte qu'une opération OU logique est réalisée

5. Capteur d'occupation de siège selon la revendication 4, les cellules de commutation individuelles d'un élément de commutation étant connectées en parallèle

6. Capteur d'occupation de siège selon l'une quelconque des revendications 4 ou 5, une cellule de commutation comprenant un capteur de pression

7. Capteur d'occupation de siège selon l'une quelconque des revendications 3 ou 6, le capteur de pression présentant un capteur de pression à film dans le mode de passage (Through-Mode)

8. Capteur d'occupation de siège selon l'une quelconque des revendications 3 ou 6, le capteur de pression présentant un capteur de pression à film dans le mode de court-circuit (Shunt-Mode).

9. Capteur d'occupation de siège selon l'une quelconque des revendications 1 à 8, le premier et le second éléments de commutation étant disposés à une distance au moins approximativement identique par rapport à une ligne médiane, s'étendant dans le sens longitudinal du véhicule, du siège et à une certaine distance l'un de l'autre

10. Capteur d'occupation de siège selon l'une quelconque des revendications 1 à 9, le premier et le second éléments de commutation étant disposés de façon sensiblement symétrique par rapport à une ligne médiane (4), s'étendant dans le sens de marche, du siège à une distance prédéfinie l'un de l'autre
